# EUROPEAN PATENT APPLICATION

(11) **EP 4 407 763 A1**
(43) Date of publication of application: **31.07.2024**
(21) Application number: 22945444.2
(22) Date of filing: 12.07.2022
(51) Int. Cl.: H01M 50/20

(54) **BATTERY BOX, BATTERY AND ELECTRICAL APPARATUS**

(30) Priority: 08.06.2022 CN 202221404850 U
(71) Applicant: Contemporary Amperex Technology Co., Limited, Ningde, Fujian 352100 (CN)
(72) Inventor: YUE, Guicheng, Ningde, Fujian 352100 (CN); PAN, Xin, Ningde, Fujian 352100 (CN); KE, Qingpeng, Ningde, Fujian 352100 (CN)
(74) Representative: Rowlands, Stuart Michael
(86) International application number: PCT/CN2022/105263
(87) International publication number: WO 2023/236309

(57) **Abstract**

Disclosed in the present application are a battery box, a battery and an electrical apparatus. The battery box comprises a housing and a cushioning component, the housing being used to accommodate a battery cell, the cushioning component being provided with multiple cushioning holes, and the cushioning component being used to deform when subjected to an external impact, so as to reduce stress transmitted to the housing. In technical solutions of embodiments of the present application, the cushioning component is provided on the housing of the battery box, and the cushioning holes are provided on the cushioning component, so as to provide space for deformation of the cushioning component to absorb an external impact and prevent the external impact from directly acting on the housing, reducing the deformation of the casing and reducing damage to a battery cell inside the housing caused by the external impact, and effectively improving battery safety and extending the service life of the battery.

## Description

### CROSS REFERENCE TO RELATED APPLICATION

This application claims priority to Chinese Patent Application No. 202221404850.4, titled "BATTERY CASING, BATTERY AND ELECTRICITY-CONSUMING APPARATUS" and filed on June 08, 2022, which is hereby incorporated by reference in its entirety.

### TECHNICAL FIELD

The present application relates to the technical field of a battery, and in particular to a battery casing, a battery and an electricity-consuming apparatus.

### BACKGROUND

With the technical development of new energy vehicles, more and more people choose the new energy vehicles as their means of transportation for travel. In order to ensure the safety of the passengers in the vehicle and reduce the damage caused by accidents, the design of the vehicle body structure mainly focuses on the structural cushioning and energy absorption of the vehicle.

At present, in some cases, a battery is generally designed at a bottom of a vehicle body, so a battery casing also needs to have the function of absorbing a certain external impact and absorbing energy to ensure the safety of the battery.

### SUMMARY

Embodiments of the present application provide a battery casing, a battery, and an electricity-consuming apparatus, which can absorb a portion of external force impact and improve the safety performance of the battery and the electricity-consuming apparatus.

In a first aspect, the present application provides a battery casing including:
a shell including an accommodating cavity to accommodate a battery cell; and
a cushion assembly provided with a plurality of cushion holes, in which the cushion assembly is configured to be deformed when subjected to an external impact to reduce a stress transmitted to the shell.

In the technical solution of embodiments of the present application, the cushion assembly is arranged on the shell of the battery casing, and provided with the cushion holes that provide a space for the deformation of the cushion assembly to effectively absorb the external impact force. Therefore, it can prevent an outer shell from direct external impact, reduce the deformation of the shell, reduce the damage to the battery cell at an inside of the shell caused by the external impact, effectively improve the safety performance of the battery, and extend the service life of the battery.

In some embodiments, an orthographic projection of each of the cushion holes on the shell may be in a shape of at least one of a honeycomb shape, a runway shape, a circle, and an ellipse. In the above structure, each of the cushion holes can be formed as a regular shape; on the one hand, it can facilitate production and design, alternatively, the cushion holes can evenly absorb forces at various positions of the cushion assembly.

In some embodiments, the cushion assembly may include a connecting member and a cushion member. The connecting member may be arranged on a side of the shell away from the battery cell, the cushion member may be fixed to the shell through the connecting member, and the cushion member is provided with the cushion holes. In the above structure, the cushion assembly can be pre-mounted on the connecting member, and then the connecting member can be connected to the shell, so that it can improve the mounting efficiency of the cushion assembly.

In some embodiments, the cushion member may be arranged on a side of the connecting member away from the shell. The cushion member can be arranged to face an outside of the battery to directly absorb the external impact, so that it can prevent the shell of the battery casing from being damaged.

In some embodiments, the cushion member may be arranged between the connecting member and the shell. In the above structure, the cushion member can absorb the displacement of the battery casing, so that it can prevent the damage caused by the displacement of the battery casing.

In some embodiments, the shell includes a top plate, a bottom plate and a plurality of side plates connecting the top plate and the bottom plate. The plurality of side plates, the top plate and the bottom plate enclose and form an accommodating cavity to accommodate the battery cell, and the connecting member is arranged on a side(s) of the side plate(s) away from the accommodating cavity. In the above structure, an area of the side plate may be relatively large, and a surface of the side plate is relatively flat, so the side plates are prone to deformation caused by the external impact. Therefore, the cushion member can be arranged on the side plate(s), so that it can more effectively protect a weak portion of the shell.

In some embodiments, the connecting member includes:
a body arranged opposite to any one of the side plates, where the cushion member is arranged; and
a connecting part formed by at least a portion of an edge of the body extending in a direction towards the side plates, in which the connecting part is connected to the side plates.

The connecting part can be arranged, so that it can enhance the strength of the connection between the connecting member and the shell.

In some embodiments, the number of connecting parts may be two, and two connecting parts can be arranged on two sides of the body respectively to be opposite to each other. Two connecting parts can be arranged opposite to each other, so that the connecting parts can be engaged with the shell to improve the mounting efficiency during mounting.

In some embodiments, the body and the connecting part can be integrally formed. The above structure can enhance the strength of the connection between the body and the connecting part, and improve the production and mounting efficiency of the connecting part.

In some embodiments, the cushion member and the connecting member may be integrally formed. In the above structure, it can enhance the strength of the connection between the cushion member and the connecting part, and improve the production and mounting efficiency of the cushion member and the connecting part.

In some embodiments, the cushion member may include a first portion and second portions, the first portion can be arranged on a surface of the body, and the second portions can cover the connecting part and be connected to two sides of the first portion respectively. In the above structure, the second portions can be arranged, so that it can improve the strength and stability of the connection between the cushion member and the connecting member.

In a second aspect, the battery provided by the present application may include the battery casing according to the above embodiments.

In a third aspect, the electricity-consuming apparatus provided by the present application may include the battery according to the above embodiment, and the battery is configured to supply an electric power.

The above description is merely an overview of the technical solution of the present application. In order to more clearly understand the technical means of the present application, they can be implemented according to the content of the description. In order to make the above and other purposes, features, and advantages of the present application more obvious and understandable, the specific embodiments of the present application can be described below.

### BRIEF DESCRIPTION OF THE DRAWINGS

The features, advantages, and technical effects of the exemplary embodiments of the present application will be described referring to the drawings below.
Fig. 1 shows a structural schematic view of a vehicle according to some embodiments of the present application;
Fig. 2 shows an exploded schematic view of a battery according to some embodiments of the present application;
Fig. 3 shows a structural schematic view of a battery module shown in Fig. 2 according to some embodiments of the present application;
Fig. 4 shows a structural schematic view of a battery casing according to some embodiments of the present application;
Fig. 5 shows a structural schematic view of a cushion member according to some embodiments of the present application;
Fig. 6 shows a structural schematic view of a connecting member according to some embodiments of the present application; and
Fig. 7 shows a structural schematic side view of a connecting member according to some embodiments of the present application.

### Detailed description of the reference numerals:

1000-vehicle;
100-battery; 200-controller; 300-motor; 101-battery casing;
10-shell; 11-first shell; 12-second shell; 13-bottom plate; 14-side plate; 15-top plate;
20-battery cell; 21-end cover; 22-outer shell; 23-electrode assembly; 24-pressure-releasing mechanism; 25-electrode terminal; 27-accommodating cavity;
40-cushion assembly; 401-cushion member; 402-cushion hole; 403-connecting member; 404-body; 405-connecting part; 406-first portion; 407-second portion.

### DETAILED DESCRIPTION

Embodiments of the technical solutions of the present application will be described in detail below in conjunction with the drawings. The following examples are only used to illustrate the technical solution of the present application more clearly, and therefore are only examples, rather than restricting the protection scope of the present application.

Unless otherwise defined, technical terms or scientific terms used in the present disclosure should be interpreted according to common meanings thereof as commonly understood by those of ordinary skills in the art. The terms used in the text are only for the purpose of describing specific embodiments and are not intended to limit the present application. The terms "including" and "having" in the description and the claims of the present application and the above description of the drawings, and any variations thereof are intended to cover non-exclusive inclusions.

In the description of the embodiments of the present application, the technical terms "first", "second" and the like are only used to distinguish different objects and cannot be understood as indicating or implying the relative importance or implying the quantity, specific order, or the primary-and-secondary relationship of the indicated technical features. In the description of the embodiments of the present application, "plurality" means two or more, unless otherwise specifically defined.

The "embodiments" referred in the present application means that specific features, structures, or characteristics described in conjunction with the embodiments may be included in at least one embodiment of the present application. This word appeared in various places in the description does not necessarily refer to the same embodiment, nor is it an independent or alternative embodiment mutually exclusive with other embodiments. It is understood explicitly and implicitly by those skilled in the art that the embodiments described herein can be combined with other embodiments.

In the description of the embodiments of the present application, the term "and/or" is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the description of the embodiments of the present application, the term "plurality" refers to two or more (including two), similarly, "a plurality of groups" refers to two or more (including two) groups, and similarly, "a plurality of sheets" refers to two or more (including two) sheets.

In the description of the present application, the technical terms "centre", "longitudinal", "lateral", "length", "width", "thickness", "upper", "lower", "front", "back", "left", "right", "vertical", "horizontal", "top", "bottom", "inner", "outer", "clockwise", "counterclockwise", "axial", "radial" and "circumferential", and the like indicate the orientation or positional relationship only for the convenience of describing the present application and simplifying the description, rather than indicating or implying that the device or the element referred to must have a specific orientation, be configured and operated in a specific orientation, and therefore cannot be understood as a limitation of the present application.

In the description of the present application, unless otherwise clearly specified and limited, the technical terms "mount", "communicate", "connect", "fix", and the like should be understood in a broad sense, for example, it can be a fixed connection, a detachable connection, or an integral connection, it can be a mechanical connection, or an electrical connection, it can be a direct connection, or it can be connected indirectly through an intermediary, and it can be an internal communication of two elements or an interaction relationship between two elements. For those of ordinary skill in the art, the specific meaning of the above-mentioned terms in the present application can be understood according to specific situations.

At present, the new energy vehicle market is developing rapidly. A battery can be as the power source of a new energy vehicle, and the safety and reliability of the battery are crucial to the entire system. In some cases, the battery can be designed at a bottom of the vehicle body, so if the battery is subjected to an external impact during the operation process of the vehicle, it can cause the deformation or damage of a shell, resulting in the decrease in the efficiency and the safety performance of a battery cell in the shell and the shortened service life of the battery.

Based on the above problems, in order to make the battery more resistant to an external impact and enhance the safety and the efficiency of the battery, the inventors have designed a battery casing that includes a cushion assembly provided with cushion holes. The cushion assembly is configured to be deformed when subjected to an external impact to reduce a stress transmitted to the shell. In the technical solution of the embodiment of the present application, the cushion assembly is arranged on the battery casing, so that it can effectively absorb the external impact on the shell, reduce the deformation of the shell, reduce the damage to the battery cell inside the shell caused by the external impact, effectively improving the safety performance of the battery, and extend the service life of the battery.

The embodiments of the present application provide an electricity-consuming apparatus applying the battery as the power source. The electricity-consuming apparatus can be, but not limited to, a mobile phone, a tablet, a laptop, an electric toy, an electric tool, a battery car, an electric car, a ship, a spacecraft, and the like. Herein, the electric toy can include a stationary electric toy or a mobile electric toy, such as a game console, an electric car toy, an electric boat toy, an electric airplane toy and the like, and the spacecraft can include an airplane, a rocket, a space shuttle, a spaceship, and the like.

In the following embodiments, for the convenience of description, a vehicle 1000 as the electricity-consuming apparatus according to the embodiments of the present application is taken as an example for description.

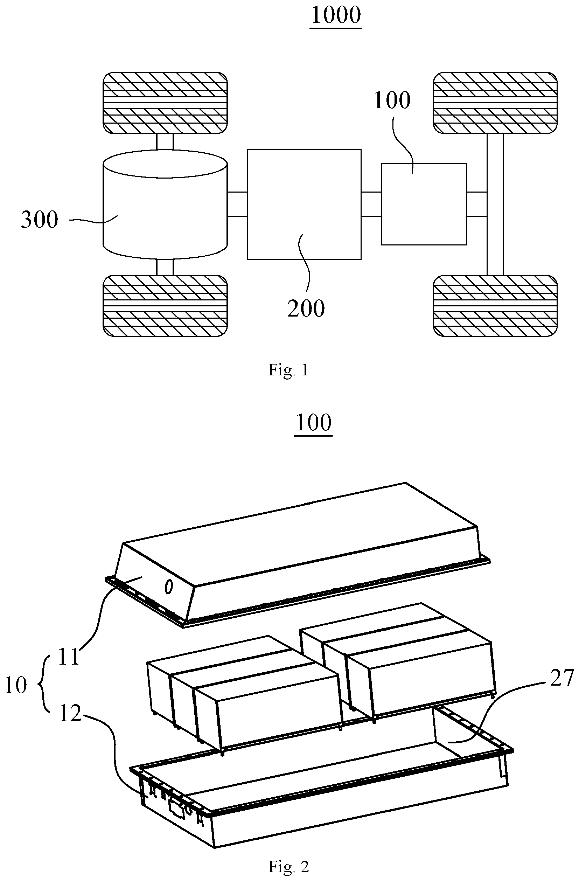

Referring to Fig. 1, Fig. 1 shows a structural schematic view of the vehicle 1000 according to some embodiments of the present application. The vehicle 1000 can be a fuel vehicle, a gas vehicle or a new energy vehicle which may be a pure electric vehicle, a hybrid vehicle, an extended-range vehicle, and the like. A battery 100 may be arranged inside the vehicle 1000, and the battery 100 may be arranged in the bottom, the front, or the back of the vehicle 1000. The battery 100 can be used to supply power to the vehicle 1000, for example, the battery 100 can be used as an operating power source of the vehicle 1000. The vehicle 1000 may further include a controller 200 and a motor 300, the controller 200 can be used to control the battery 100 to supply power to the motor 300, for example, for the work electricity-consuming demand when starting, navigating, and driving the vehicle 1000.

In some embodiments of the present application, the battery 100 can not only be used as an operating power source for the vehicle 1000, but can also be used as a driving power source for the vehicle 1000, replacing or partially replacing the fuel oil or the natural gas to provide a driving power for the vehicle 1000.

Referring to Fig. 2, Fig. 2 shows an exploded schematic view of the battery 100 according to some embodiments of the present application. The battery 100 includes a shell 10 and a battery cell (not shown in the figure), and the shell 10 is configured to accommodate the battery cell. Herein, the shell 10 provides an accommodating space for the battery cell, and the shell 10 can adopt various structures.

In some embodiments, the shell 10 may include a first shell 11 and a second shell 12. The first shell 11 and the second shell 12 may cover with each other, and the first shell 11 and the second shell 12 jointly define the accommodating space for accommodating the battery cell. The second shell 12 can be a hollow structure having an opening at an end, the first shell 11 can be a plate-like structure, and the first shell 11 may cover a side of the second shell 12 with the opening so that the first shell 11 and the second shell 12 jointly define an accommodating space. Or each of the first shell 11 and the second shell 12 can be the hollow structure having the opening at a side, and the side of the first shell 11 with the opening covers and closes to the side of the second shell 12 with the opening. Of course, the shell 10 formed by the first shell 11 and the second shell 12 can be in various shapes, such as a cylinder and a cuboid.

In the battery 100, there may be a plurality of battery cells, which may be connected in series, in parallel or in mixed connection. The mixed connection means that the plurality of battery cells may include the connection in series and the connection in parallel. The plurality of battery cells can be directly connected in series, in parallel or in mixed connection together, and then the whole composed of the plurality of battery cells can be accommodated in the shell 10. Certainly, the battery 100 may be in form of the plurality of battery cells connected in series, in parallel or in mixed connection to form a battery module firstly, and then a plurality of the battery modules are connected in series, in parallel or in mixed connection to form a whole, and accommodated in the shell 10.

Each of the battery cells can be a secondary battery or a primary battery; the battery cell can also be a lithium-sulphur battery, a sodium-ion battery, or a magnesium-ion battery, but is not restricted thereto. Each of the battery cells 20 may be in the form of a cylinder, a flat body, a cuboid, or other shapes.

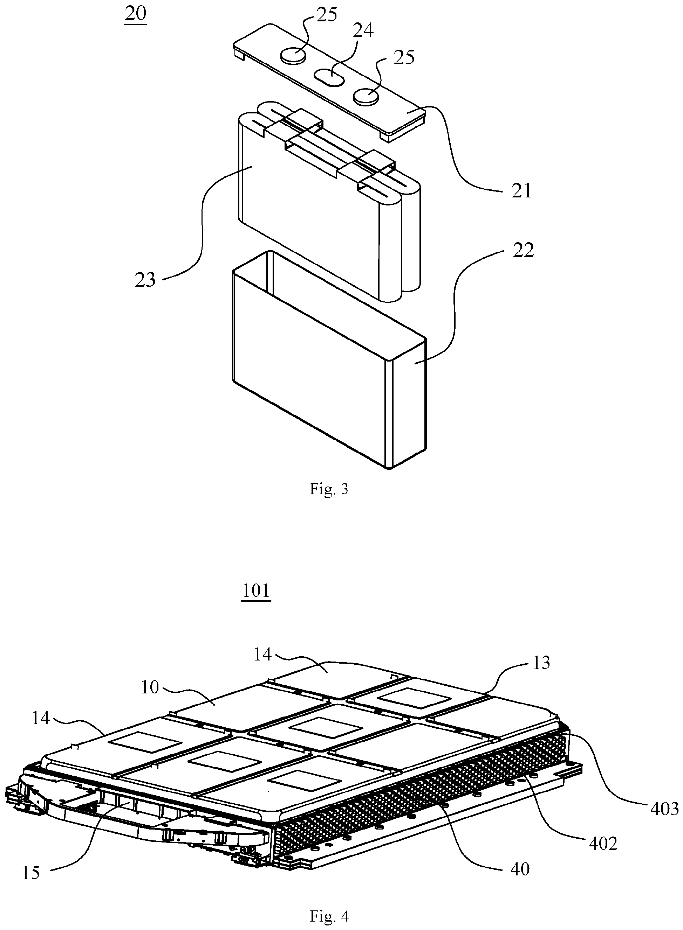

The battery cell provided by the embodiments of the present application refers to the smallest unit constituting the battery. As shown in Fig. 3, the battery cell 20 may include an end cover 21, an outer shell 22, an electrode assembly 23 and other functional components.

The end cover 21 refers to a component that covers an opening of the outer shell 22 to isolate an internal environment of the battery cell 20 from the external environment. For no purpose of limitation, the shape of the end cover 21 can be adapted to the shape of the outer shell 22 to match with the outer shell 22. Optionally, the end cover 21 may be made of a material with a certain hardness and strength, such as aluminium alloy. Thus, the end cover 21 is not easily deformed when being squeezed and collided, so that the battery cell 20 can have higher structural strength, and the safety performance can also be improved.

The end cover 21 may include a functional component(s) such as an electrode terminal 25. The electrode terminal 25 can be used to be electrically connected with the electrode assembly 23 for outputting or inputting the electric energy of the battery cell 20. In some embodiments, the end cover 21 may also be provided with a pressure-releasing mechanism 24 for releasing the internal pressure when the pressure or temperature of inside of the battery cell 20 reaches a threshold value. The material of the end cover 21 may also be various, for example, a copper, an iron, an aluminium, a stainless steel, an aluminium alloy, a plastic or the like, and the embodiments of the present application do not restrict to that.

The electrode assembly 23 is a component in which an electrochemical reaction occurs in the battery cell 20. One or more electrode assemblies 23 may be contained within the outer shell 22. The electrode assembly 23 can be mainly formed by winding or stacking a positive electrode sheet and a negative electrode sheet, and a separator can be usually provided between the positive electrode sheet and the negative electrode sheet. Portions of the positive electrode sheet and the negative electrode sheet having an active material form a main body of the electrode assembly. Portions of the positive electrode sheet and the negative electrode sheet that do not have the active material form electrode tabs respectively. A positive electrode tab and a negative electrode tab can be located at one end of the main body together or at two ends of the main body respectively. During the charging and discharging process of the battery, a positive electrode active material and a negative electrode active material react with an electrolyte, and the electrode tabs can be connected to the electrode terminal 25 to form a current loop.

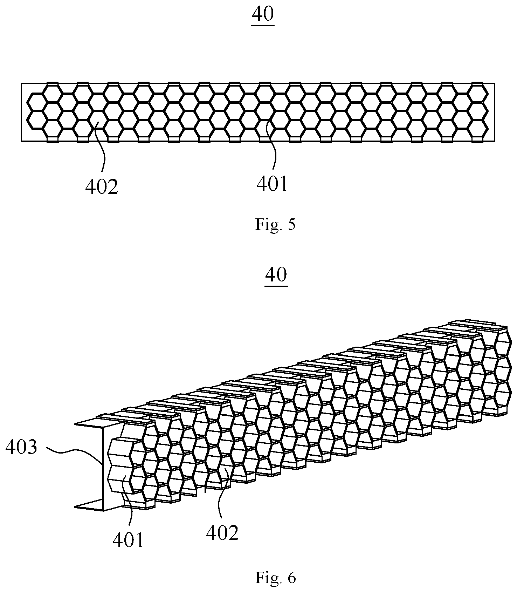

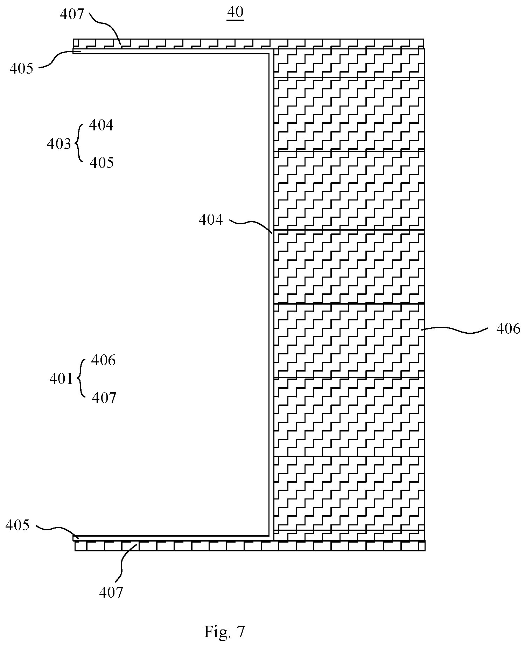

Referring to Fig. 4 to Fig. 7, Fig. 4 shows a structural schematic view of a battery casing 101 according to some embodiments of the present application; Fig. 5 shows a structural schematic view of a cushion member 401 according to some embodiments of the present application; Fig. 6 shows a structural schematic view of a connecting member 403 according to some embodiments of the present application; and Fig. 7 shows a structural schematic side view of the connecting member 403 according to some embodiments of the present application.

As shown in Fig. 2 and Fig. 4, the battery casing 101 provided by the present application may include the shell 10 and a cushion assembly 40. The shell 10 can be used to accommodate the battery cell 20. The cushion assembly 40 is provided with a plurality of cushion holes 402. The cushion assembly 40 is configured to be deformed when subjected to the external impact to reduce a stress transmitted to the shell 10.

The cushion assembly 40 has a porous structure. Therefore, when the cushion assembly 40 is subjected to the external impact, the porous structure can be compressed to absorb the external impact and reduce the external force transmitted to the battery casing 101.

The shell 10 can include the end cover 21 and the outer shell 22. The end cover 21 refers to a component that covers an opening of the outer shell 22 to isolate an internal environment of the battery cell 20 from the external environment. One or more electrode assembly 23 can be accommodated in the outer shell 22. The material of the shell 10 can also be various, such as a copper, an iron, an aluminium, a stainless steel, an aluminium alloy, a plastic or the like, and the embodiments of the present application do not specially restrict to that.

In the technical solution of the embodiments of the present application, the cushion assembly 40 can be arranged on the shell 10 of the battery casing 101, and by providing the cushion holes 402 in the cushion assembly 40 that provide a space for the deformation of the cushion assembly 40 to effectively absorb the external impact force, the outer shell 22 is protected from direct external impact, the deformation of the shell 10 is reduced, and the damage to the battery cell 20 at an inside of the shell 10 caused by the external impact is reduced, effectively improving the safety performance of the battery 100 and extending the service life of the battery 100.

In some embodiments of the present application, an orthographic projection of each of the cushion holes 402 on the shell 10 may be in a shape of at least one of a honeycomb shape, a runway shape, a circle, and an ellipse. In the above structure, each of the cushion holes 402 can be formed as a regular shape; on the one hand, it can facilitate production and design, alternatively, the cushion holes 402 can evenly absorb forces at various positions of the cushion assembly 40. Exemplarily, as shown in Fig. 5, a hexagonal shape of the honeycomb structure mentioned above has a certain degree of the stability, so that the hexagonal shape can maintain its own stability when the hexagonal shape is not subjected to the external force impact. At the same time, the hexagonal shape can support a larger internal space and provide a larger deformation space to absorb a large amount of external force impact.

In some embodiments of the present application, as shown in Fig. 4 and Fig. 6, the cushion assembly 40 may include the connecting member 403 and the cushion member 401. The connecting member 403 may be arranged on a side of the shell 10 away from the battery cell 20, the cushion member 401 may be fixed to the shell 10 through the connecting member 403, and the cushion holes 402 may be provided on the cushion member 401.

The connecting member 403 can be configured to connect the cushion member 401 with the shell 10. The cushion assembly 403 can be fixedly connected to the shell 10, or the cushion assembly 403 can be detachably connected to the shell 10. The connecting member 403 may be provided as a plate body structure and arranged parallel to a surface of the shell 10 to achieve a stable connection between the cushion assembly 40 and the shell 10. In addition, the connecting member 403 can be arranged to be attached to an outer surface of the shell 10, so as to reduce a contour size of the battery casing 101. Optionally, the connecting member 403 may be made of a material with a high compressive resistance strength, such as a stainless steel, an aluminium alloy, and a steel plate, to achieve the protection of the outer shell 22.

In the above structure, the cushion assembly 401 can be pre-mounted on the connecting member 403, and then the connecting member 403 can be connected to the shell 10, so that it can improve the mounting efficiency of the cushion assembly 40.

In some embodiments of the present application, as shown in Fig. 4, the cushion member 401 may be arranged on a side of the connecting member 403 away from the shell 10, and the cushion holes 402 may be formed on the cushion member 401. In the above structure, the cushion member 401 can be arranged to face an outside of the battery casing 101 and can directly absorb the external impact.

In some embodiments of the present application, the cushion member 401 can be arranged between the connecting member 403 and the shell 10. In the above structure, the cushion member 401 can absorb the displacement of the battery casing 101, so that it can prevent the damage caused by the displacement of the casing.

In some embodiments of the present application, the cushion assembly 40 can be made of a flexible material that can absorb the external force, and the flexible material may include a polyurethane, a rubber, and the like. In the above solution, when the battery casing 101 is subjected to a certain external force impact, the cushion assembly 40 on the surface can release and restore an original shape. When the cushion member 401 is made of the flexible material, the material itself may be the porous structure, so the holes in the material itself can be used as the cushion holes 402. It is also possible to perforate the flexible material to form the cushion holes 402 with a specific shape.

In some embodiments of the present application, the cushion assembly 40 can also be made of a material with a certain strength to form a rigid protection for the shell 10. For example, the cushion assembly 40 can be made of a metal material, including a stainless steel, a common steel plate and the like. When the cushion member 401 is made of a rigid material, the cushion holes 402 on the cushion member 401 can provide a space for the deformation of the rigid material, thereby preventing the cushion member 401 from directly transmitting the force to the outer shell 22 after being impacted and from resulting in damage to the outer shell 22.

The above structure can be arranged according to the using requirement, which is not restricted here.

In some embodiments of the present application, the shell 10 may include a top plate 15, a bottom plate 13 and a plurality of side plates 14 connecting the top plate 15 and the bottom plate 13. The plurality of side plates 14, the top plate 15 and the bottom plate 13 may enclose and form an accommodating cavity 27, and the accommodating cavity 27 can be used to accommodate the battery cell 20. The connecting member 403 may be arranged on a side of at least one of the side plates 14 away from the accommodating cavity 27.

Each of the top plate 15, the bottom board 13 and the side plates 14 may be in the shape of a flat plate to form the hexahedron-shaped shell 10 with a relatively stable structure. The side plates 14 may have two different sizes, and two side plates 14 arranged opposite to each other have the same area and are parallel to each other. The area of each of the top plate 15 and the bottom plate 13 may be smaller than the area of each of the side plates 14 with a larger area.

In the above structure, the area of each of the side plates 14 of the shell 10 may be relatively large, and a surface of each of the side plates may be relatively flat, so the side plates 14 are prone to deformation caused by the external impact. Therefore, the cushion member 40 can be arranged on the side plate(s) 14, so that it can more effectively protect a weak portion of the shell 10. However, the cushion assembly 40 can also be arranged on the top plate 15 and the bottom board 13 to form the protection for the top plate 15 and the bottom plate 13. The specific structure can be arranged according to an arrangement position of the battery casing 101, which is not limited here.

In some embodiments of the present application, as shown in Fig. 7, the connecting member 403 may include a body 404 and a connecting part 405. The body 404 can be arranged opposite to any one of the side plates 14, and the cushion member 401 may be arranged at the body 404. The connecting part 405 may be formed by at least a portion of an edge of the body 404 extending in a direction towards the corresponding side plate 14, and the connecting part 405 may be connected to the side plate 14 adjacent to the corresponding side plate 14. A size of the connecting part 405 in a length direction of the side plate 14 can be arranged to be equal to the size of the corresponding side plate 14, so as to increase the connection strength and stability between the connecting part 405 and the shell 10.

The body 404 extends toward the corresponding side plate 14, so that it can increase a surface area of the connecting member 403. Therefore, in the above structure, the connecting part 405 can be arranged to enhance the strength of the connection between the connecting member 403 and the shell 10.

In some embodiments, the body 404 may be a plate-like structure parallel to the side plates 14, and an orthographic projection of the body 404 on the corresponding side plate 14 completely covers the corresponding side plate 14. In the above-mentioned technical solution, the body 404 can provide the comprehensive protection to the side plates 14, so that it can improve the strength of the connection between the cushion member 401 and the side plates 14, and enhance the protection function of the body 404 to the shell 10.

In some embodiments, the orthographic projection of the cushion member 401 on the corresponding side plate 14 completely covers the corresponding side plate 14. The above-mentioned structure can increase a covering area of the cushion assembly 40 on the corresponding side plate 14, so that it can effectively improve the protection capability of the cushion assembly 40.

In some embodiments of the present application, the number of connecting parts 405 may be two, and the two connecting parts 405 can be arranged on two sides of the body 404 respectively to be opposite to each other. Each of the connecting parts 405 may be a plate-like structure, and the connecting parts 405 can respectively extend along surfaces of two side plates 14 adjacent to the corresponding side plate 14. The body 404 can be connected to two adjacent side plates 14 through the connecting member 403 to ensure the structural integrity of the body 404 and the cushion member 401.

In the above technical solution, two opposite connecting parts 405 can be arranged, the connection stability between the cushion member 401 and the shell 10 can be improved, and the structural integrity of the cushion member 401 can be ensured, so that the cushion function can be ensured, and the mounting efficiency can be improved.

In some embodiments of the present application, the body 404 and the connecting part 405 can be integrally formed. The body 404 and the connecting part 405 can be made of the same material, so that it can simplify the manufacturing process and reduce the manufacturing cost. Exemplarily, the edge of the body 404 can be bent by 90° toward an opposite direction to form the connecting part 405. The above structure can enhance the strength of the connection between the body 404 and the connecting part 405, and improve the production and mounting efficiency of the connecting part 403.

In some embodiments of the present application, the connecting member 403 can be connected with the shell 10 by the engaging connection. The above structure can improve the connection efficiency between the connecting member 403 and the shell 10.

In some embodiments of the present application, the cushion member 401 and the connecting member 403 may be integrally formed. The above structure can improve production efficiency. Exemplarily, each of the cushion member 401 and the connecting member 403 may be made of the flexible material, so that it not only can satisfy the cushion function, but also improve the convenience of manufacture.

In some embodiments of the present application, the cushion member 401 includes a first portion 406 and second portions 407; the first portion 406 can be arranged on a surface of the body 404, and the second portions 407 can cover the connecting parts 405 and be connected to two sides of the first portion 406 respectively. The second portions 407 can be connected with the connecting parts 405, so that they can increase the stability of connection between the cushion member 401 and the connecting member 403. Moreover, the second portions 407 themselves also have the cushioning property, and can provide the protection to at least a portion of the two side plates 14 adjacent to the second portions 407 respectively.

According to some embodiments of the present application, the present application further provides a battery 100 including the battery casing 101 described in any one of the technical solutions above. Specifically, the battery 100 may further include the battery cell(s) 20. The battery cell(s) 20 can be arranged in the accommodating cavity of the battery casing 101. The battery casing 101 may include the shell 10 and the cushion assembly 40. The shell 10 may have the accommodating cavity 27 for accommodating the battery cell. The cushion assembly 40 is configured to be deformed when subjected to the external impact to reduce a stress transmitted to the shell 10. The cushion assembly 40 is provided with a plurality of cushion holes 402. By providing the cushion assembly 40 with the plurality of cushion holes 402 that provide the space for the deformation of the cushion member 401 to effectively absorb the external impact force, the outer shell 22 is protected from direct external impact.

The above-mentioned battery 100 may be provided with the cushion assembly 40 for absorbing the external impact on the shell 10, so that it can reduce the deformation of the shell 10 and reduce the damage of the battery cell 20 at the inside of the shell 10 by the external impact, effectively improve the safety of the battery 100, and prolong the service life of the battery 100.

According to some embodiments of the present application, the electricity-consuming apparatus provided by the present application may include the battery 100 described in any one of the technical solutions above, and the battery 100 can be configured to supply an electric power.

The above-mentioned battery 100 may be provided with the cushion assembly 40, so that it can also achieve the technical effect of improving the ability of the battery casing 101 to prevent the external impact and improving the safety and efficiency of the battery. The electricity-consuming apparatus may be any one of the devices or systems applying the battery 100 as described above. On the premise that the battery 100 has the above-mentioned technical effects, the electricity-consuming apparatus in the present application can achieve a more stable, safe, and efficient operation.

Finally, it should be noted that the above embodiments are only used to illustrate the technical solutions of the present application and do not to restrict them; although the present application has been described in detail with reference to the various embodiments as described above, those skilled in the art should understand that they can still modify the technical solutions recited in the embodiments as described above, or equivalently replace some or all of the technical features; these modifications or substitutions do not separate the essence of the corresponding technical solutions from the scope of the technical solutions of the various embodiments of the present application, and they should all be covered within the scope of the claims and description of the present application. Especially, as long as there is no structural conflict, the various technical features mentioned in each of the embodiments can be combined in any way. The present application is not restricted to the specific embodiments disclosed in the text, but includes all technical solutions falling within the scope of the claims.

## Claims

1. A battery casing (101), comprising:
a shell (10) configured to accommodate a battery cell (20); and
a cushion assembly (40) provided with a plurality of cushion holes (402), and configured to be deformed to reduce a stress transmitted to the shell (10) when the cushion assembly (40) is subjected to an external impact,
wherein the cushion assembly (40) comprises a connecting member (403) and a cushion member (401), the connecting member (403) is arranged on a side of the shell (10) away from the battery cell (20), the cushion member (401) is fixed to the shell (10) through the connecting member (403), and the cushion holes (402) are provided in the cushion member (401);
the cushion member (401) is arranged on a side of the connecting member (403) away from the shell (10).

2. The battery casing (101) according to claim 1, wherein an orthographic projection of each of the cushion holes (402) on the shell (10) is in a shape of at least one of a honeycomb shape, a runway shape, a circle, and an ellipse.

3. The battery casing (101) according to claim 1, wherein the shell (10) comprises a top plate (15), a bottom plate (13) and a plurality of side plates (14) connecting the top plate (15) and the bottom plate (13), the plurality of side plates (14), the top plate (15) and the bottom plate (13) enclose and form an accommodating cavity (27) to accommodate the battery cell (20), and the connecting member (403) is arranged on a side of at least one of the side plates (14) away from the accommodating cavity (27).

4. The battery casing (101) according to claim 3, wherein the connecting member (403) comprises:
a body (404) arranged opposite to any one of the side plates (14), where the cushion member (401) is arranged; and
a connecting part (405), formed by at least a portion of an edge of the body (404) extending in a direction towards the side plate (14), wherein the connecting part (405) is connected to the side plates (14).

5. The battery casing (101) according to claim 4, wherein the connecting member (403) comprises two said connecting parts (405) that are arranged on two sides of the body (404) respectively to be opposite to each other.

6. The battery casing (101) according to claim 5, wherein the cushion member (401) comprises a first portion (406) and second portions (407), the first portion (406) is arranged on a surface of the body (404), and the second portions (407) cover the connecting parts (405) and are connected to two sides of the first portion (406) respectively.

7. The battery casing (101) according to any one of claims 4 to 6, wherein the body (404) and the connecting part (405) are integrally formed.

8. The battery casing (101) according to claim 6, wherein the cushion member (401) and the connecting member (403) are integrally formed.

9. A battery (100), comprising the battery casing (101) according to any one of claims 1 to 8.

10. An electricity-consuming apparatus, comprising the battery (100) according to claim 9, wherein the battery (100) is configured to supply an electric power.
